# EUROPEAN PATENT SPECIFICATION

(11) **EP 3 298 535 B1**
(45) Date of publication and mention of the grant of the patent: **02.09.2020**
(21) Application number: 16857761.7
(22) Date of filing: 19.10.2016
(51) Int. Cl.: G06F 21/62

(54) **ELECTRONIC APPARATUS AND CONTROLLING METHOD THEREOF**
ELEKTRONISCHE VORRICHTUNG UND STEUERUNGSVERFAHREN DAFÜR
APPAREIL ÉLECTRONIQUE ET SON PROCÉDÉ DE COMMANDE

(30) Priority: 19.10.2015 KR 20150145551; 18.04.2016 KR 20160047135
(43) Date of publication of application: 28.03.2018
(73) Proprietor: Samsung Electronics Co., Ltd., Suwon-si, Gyeonggi-do 16677 (KR)
(72) Inventor: KANG, Yong-goo, Seoul 06763 (KR); HWANG, Yong-ho, Suwon-si Gyeonggi-do 16505 (KR)
(74) Representative: Appleyard Lees IP LLP
(86) International application number: PCT/KR2016/011729
(87) International publication number: WO 2017/069503

(56) References cited:
- WO-A2-2012/078898
- US-A1- 2009 022 321
- US-A1- 2013 205 404
- US-A1- 2014 101 443
- US-A1- 2014 283 089
- US-A1- 2015 118 992
- Yajin Zhou ET AL: "Taming Information-Stealing Smartphone Applications (on Android)" In: "Medical image computing and computer-assisted intervention - MICCAI 2015 : 18th international conference, Munich, Germany, October 5-9, 2015; proceedings", 1 January 2011 (2011-01-01), Springer International Publishing, Cham 032548, XP055273036, ISSN: 0302-9743 ISBN: 978-3-319-69952-3 vol. 6740, pages 93-107, DOI: 10.1007/978-3-642-21599-5_7, * pages 4,5,13; figure 1 *
- ALASTAIR R. BERESFORD ET AL: "MockDroid", PROCEEDINGS OF THE 12TH WORKSHOP ON MOBILE COMPUTING SYSTEMS AND APPLICATIONS, HOTMOBILE '11, 1 January 2011 (2011-01-01), page 49, XP055173077, New York, New York, USA DOI: 10.1145/2184489.2184500 ISBN: 978-1-45-030649-2

## Description

### Technical Field

Aspects of the disclosure relate generally to an electronic apparatus and a controlling method thereof, and for example, to an electronic apparatus which protects personal information and a controlling method thereof.

### Background Art

With the development of electronic technologies, various types of electronic products have been developed and distributed. In particular, various display apparatuses such as TV, mobile phone, PC, notebook PC, and PDA are widely used in general households.

As such display apparatuses are widely used, users' needs for various functions have been increasing. Accordingly, manufacturers have made efforts to satisfy the increasing needs of users, introducing products with new functions.

In particular, such display apparatuses may execute various applications, and those applications may request a user's personal information to perform various functions. The applications which obtain personal information may perform various functions based on the obtained personal information.

However, in this case, the user's personal information may be leaked through the applications, which is not the user's intention and may cause problems.

Yajin Zhou et al: "Taming Information-Stealing Smartphone Applications (on Android)" in: "Medical image computing and computer-assisted intervention - MICCAI 2015: 18th International Conference, Munich, Germany, October 5-9 2015; proceedings", 1 January 2011, Springer International Publishing, Cham 032548 discloses a new privacy mode for smartphones. Alastair, R Beresford et al: "MockDroid", Proceedings of the 12th Workshop on Mobile Computing Systems and Applications, Hotmobile '11, 1 January 2011, page 49 discloses a modified version of the Android operation system which allows a user to "mock" an application's access to a resource.

### Disclosure of Invention

### Technical Problem

An aspect of the example embodiments relates to an electronic apparatus configured to execute an application and to provide a normal service while protecting personal information and a controlling method thereof.

### Solution to Problem

According to an example embodiment, an electronic apparatus is provided which is configured to execute at least one application to perform a function using personal information, including a storage configured to store the personal information, where information related to protection of the personal information is set for each application and a processor configured to, in response to receiving a request for the personal information from the application, determine whether to protect the personal information based on the set information, to encrypt the personal information and provide the encrypted personal information to the application based on the determination result, and in response to receiving an execution request with respect to a function related to encrypted personal information from the application, to decrypt the encrypted personal information and to execute the function.

The processor may be configured to determine whether the request from the application is a request for the personal information or a request to execute the function.

The processor may be configured to determine whether to protect the personal information based on information related to protection of the personal information when the application requests the personal information, or to determine whether to protect the personal information based on information related to protection of the personal information when the personal information requested by the application is preset personal information.

The information related to protection of the personal information may include information regarding an application which does not require protection of the personal information and a type of personal information which does not require the protection.

The processor may be configured to not determine whether to protect the personal information requested by the application based on the information regarding an application which does not require protection of the personal information and a type of personal information which does not require the protection, to not encrypt the personal information and to provide the personal information to the application.

The apparatus may further include a display, and the processor may be configured to display an execution result of the function on the display.

The personal information may include one or more of information regarding a location of the electronic apparatus, contact information, information regarding a photo file, and information regarding a message.

The processor, in response to receiving a request for content information from the application, may be configured to encrypt the contact information and to provide the encrypted contact information to the application, and in response to receiving an execution request with respect to a function related to the encrypted contact information from the application, to decrypt the encrypted contact information and to display on the display a content UI which is generated based on the decrypted contact information.

The processor, in response to receiving an execution request with respect to a call function based on encrypted contact information from the application, may be configured to decrypt the encrypted contact information and to execute the call function.

The processor, in response to receiving a request for the location information from the application, may be configured to encrypt the location information and to provide the encrypted location information to the application, and in response to receiving an execution request with respect to a function related to the encrypted location information from the application, to decrypt the encrypted location information and to display on the display a map screen which is generated based on the decrypted location information.

The processor may encrypt purchase information and provide the encrypted purchase information to the application, and in response to receiving an execution request regarding a function related to the encrypted purchase information from the application, decrypt the encrypted purchase information and transmit the decrypted purchase information to an external shopping server.

The processor may encrypt print information and provide the encrypted print information to the application, and in response to receiving an execution request regarding a function related to the encrypted print information from the application, decrypt the encrypted print information and print the decrypted print information.

According to an example embodiment, a method of controlling an electronic apparatus which executes at least one application to perform a function using personal information is provided, including in response to receiving a request for the personal information from the application, determining whether to protect the personal information based on pre-stored information where information related to protection of the personal information is set for each application, encrypting the personal information and providing the encrypted personal information to the application based on the determination result, and in response to receiving an execution request with respect to a function related to encrypted personal information from the application, decrypting the encrypted personal information and executing the function.

The method may further include determining whether the request from the application is a request for the personal information or a request to execute the function.

The determining may include determining whether to protect the personal information based on information related to protection of the personal information when the application requests the personal information, or determines whether to protect the personal information based on information related to protection of the personal information when the personal information requested by the application is preset personal information.

The information related to protection of the personal information may include information regarding an application which does not require protection of the personal information and a type of personal information which does not require the protection.

The providing may include determining not to protect the personal information requested by the application based on the information regarding an application which does not require protection of the personal information and a type of personal information which does not require the protection, and not encrypting the personal information and providing the personal information to application.

The method may further include displaying an execution result of the function.

The personal information may include one or more of information regarding a location of the electronic apparatus, contact information, information regarding a photo file, and information regarding a message.

The providing may include, in response to receiving a request for content information from the application, encrypting the content information and providing the encrypted contact information to the application, and in response to receiving an execution request with respect to a function related to the encrypted contact information from the application, decrypting the encrypted contact information and displaying on the display a content UI which is generated based on the decrypted contact information.

The executing may include, in response to receiving an execution request with respect to a call function based on encrypted contact information from the application, decrypting the encrypted contact information and executing the call function.

The executing may include encrypting purchase information and providing the encrypted purchase information to the application, and in response to receiving an execution request regarding a function related to the encrypted purchase information from the application, decrypting the encrypted purchase information and transmitting the decrypted purchase information to an external shopping server.

The executing may include encrypting print information and providing the encrypted print information to the application, and in response to receiving an execution request regarding a function related to the encrypted print information from the application, decrypting the encrypted print information and printing the decrypted print information.

According to an example embodiment, a storage medium which stores a program for executing at least one application to perform a function using personal information is provided, the program, when executed causing an electronic device to operate to, in response to receiving a request for the personal information from the application, determine whether to protect the personal information based on pre-stored information where information related to protection of the personal information is set for each application, encrypt the personal information and provide the encrypted personal information to the application based on the determination result, and in response to receiving an execution request for a function related to the encrypted personal information from the application, decrypt the encrypted personal information and execute the function.

### Advantageous Effects of Invention

According to the various example embodiments, a user may use a service normally even after setting protection of personal information and prevent and/or reduce the likelihood of the personal information from being leaked.

### Brief Description of Drawings

The above and/or other aspects of the disclosure will be more apparent from the following detailed description, taken in conjunction with the accompanying drawings, in which like reference numerals refer to like elements, and wherein:
FIG. 1 is a block diagram illustrating an example configuration of an electronic apparatus;
FIG. 2 is a block diagram illustrating an example configuration of an electronic apparatus;
FIG. 3 is a block diagram illustrating an example configuration of the electronic apparatus of FIG. 1;
FIG. 4 is a diagram illustrating an example software module stored in a storage;
FIG. 5 is a diagram illustrating an example processing of a processor;
FIGS. 6 to 7 are flowcharts illustrating an example of data processing between each module of FIG. 5;
FIGS. 8 to 13 are diagrams illustrating various example embodiments;
FIG. 14 is a block diagram illustrating an example structure of a Privacy Protection Module;
FIGS. 15 and 16 are diagrams illustrating an example encryption method;
FIG. 17 is a flowchart illustrating an example method of controlling an electronic apparatus; and
FIGS. 18 to 21 are diagrams illustrating various example embodiments.

### Best Mode for Carrying out the Invention

-

### Mode for the Invention

Hereinafter, example embodiments of the present disclosure will be described in greater detail with reference to the accompanying drawings. In the following description, detailed descriptions of well-known functions or configurations may be omitted if they would unnecessarily obscure the subject matters of the disclosure. The terms used in the example embodiments of the present disclosure have been defined in consideration of the functions of the present disclosure, and may vary depending on users, operators or precedents. Thus, the definition of the terms should be made in consideration of the overall contents of the present disclosure.

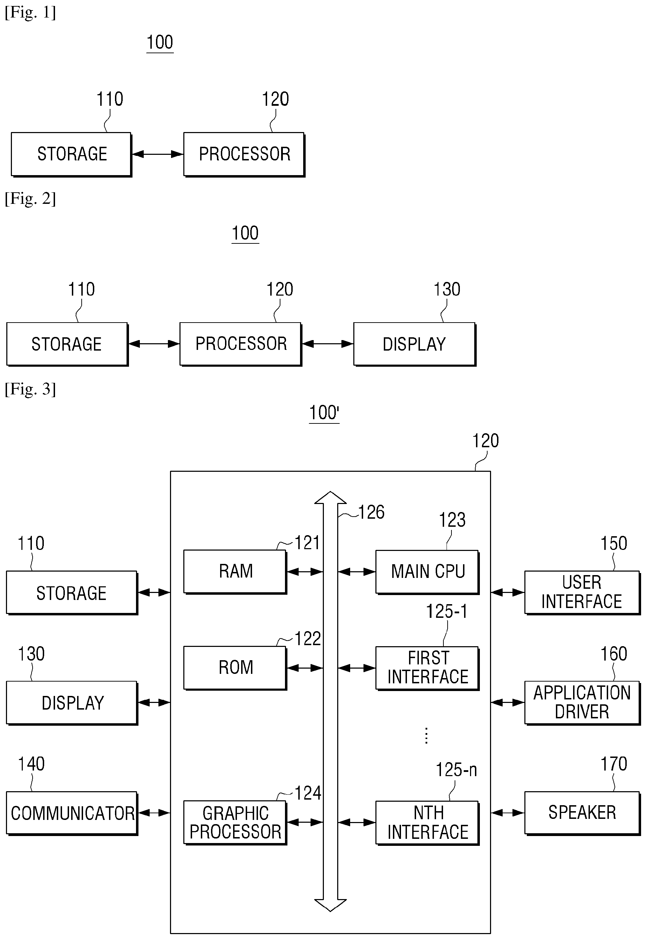

FIG. 1 is a block diagram illustrating an example configuration of an electronic apparatus.

Referring to FIG. 1, an electronic apparatus 100 includes a storage 110 and a processor (e.g., including processing circuitry) 120.

For example, the electronic apparatus 100 may be any apparatus which executes at least one application to perform a function using personal information, and may be realized as various types of electronic apparatuses such as, for example, a TV, electronic black board, electronic table, Large Format Display (LFD), smart phone, tablet, desktop PC, notebook PC, set-top box, smart watch, wearable device, image forming apparatus, home appliances (for example, food storage device, air conditioner, cleaner, oven, microwave, washing machine or air purifier), medical device (for example, medical image photographing device or medical measuring device (blood glucose monitoring device, heart rate monitoring device, blood pressure monitoring device, body temperature measuring device, etc.)), vehicle infotainment device, marine electronic equipment (for example, marine navigation equipment, gyro compass, etc.), avionics electronic device, security device, vehicle head unit, industrial or household robot, drone, ATM of financial organization, point of sales (POS) of a shop, or device of Internet of Things (IOT) (for example, bulb, various sensors, spring-cooler device, fire alarm, thermostat, streetlamp, toaster, fitness equipment, hot water tank, heater, boiler, etc., but is not limited thereto

The storage 110 may store personal information and information where information related to protection of personal information is set for each application.

For example, the personal information may include, for example, information which may expose privacy of a user. For example, the personal information according to an example embodiment may include at least one of information regarding the location of the electronic apparatus 100, contact information, information regarding a photo file, and information regarding a message.

For example, in a case where a user possesses the electronic apparatus 100, the information regarding the location of the electronic apparatus 100 may correspond to information regarding the location of the user.

In addition, the contact information may include contact information such as name, telephone number, e-mail address, home page address, etc.

The information regarding a photo file may include a photo photographed by a user, a photo downloaded through Internet, a captured photo, etc.

The information regarding a message may include information regarding text which a user exchanges with a third person, comments on SNS, e-mail, etc.

The personal information may include not only the above-described information regarding the location of the electronic apparatus 100, contact information, and information regarding a photo file, but may also include information regarding all documents written or stored by a user, such as document file, contents, music file, video, memo file, schedule list file, etc. which are stored in the electronic apparatus 100.

The information related to protection of personal information may be set for each application and may include information regarding whether it is necessary to protect personal information which is requested by each of a plurality of applications and a method of encrypting the personal information.

For example, the information related to protection of personal information may be set for each application and may include information that the personal information which is required when a first application from among a plurality of applications is executed is information regarding the location of the electronic apparatus 100 and that there is no need to protect the information regarding the location of the electronic apparatus 100 with respect to the first application.

In addition, the information related to protection of personal information may be set for each application and may include information that the personal information which is required when a second application from among a plurality of applications is executed is contact information and that there is no need to protect the contact information with respect to the second application.

The information related to protection of personal information may be set for each application and may include a policy, for example, reference information regarding whether to protect personal information with respect to each application. In addition, information regarding the method of encrypting personal information, for example, information regarding which encryption code is to be used for encrypting may also be included.

If a request for personal information is received from an application, the processor 120 may be configured to determine whether to protect the personal information based on the information related to protection of personal information set for each application, to encrypt the personal information based on the determination result and to provide the encrypted personal information to the application, and if an execution request with respect to a function related to the encrypted information is received from the application, to decrypt the encrypted personal information and to execute the function.

For example, if an application requests personal information, the processor 120 may be configured to determine whether to protect the personal information regarding the corresponding application based on the set information which is stored in the storage 110, and if it is determined that the personal information should be protected and be provided with respect to the corresponding application, the processor 120 may be configured to encrypt the personal information and to provide the encrypted personal information to the corresponding application.

If an execution request regarding a function related to encrypted personal information is received from an application which is provided with the encrypted personal information, the processor 120 may be configured to decrypt the encrypted personal information and to execute the function.

For example, in a case where personal information is contact information, an application is a chatting application, and it is determined that the personal information should be protected and provided with respect to the chatting application, the processor 120 may be configured to encrypt the contact information and to provide the encrypted contact information to the chatting application. If the chatting application which is provided with the encrypted contact information generates a friend list UI based on the contact information and requests to execute the function of displaying the generated friend list UI, the processor 120 may be configured to decrypt the encrypted contact information and display the generated friend list UI.

As described above, the chatting application may receive and use only encrypted contact information, and may not be provided with actual contact information which is not encrypted. In addition, the function of displaying a friend list UI which the chatting application wishes to execute can be executed normally in the electronic apparatus 100. Therefore, it is possible to execute the application normally while preventing personal information such as contact information from being leaked.

For example, when a function related to encrypted personal information which is requested by an application is executed in the electronic apparatus 100, the processor 120 may be configured to decrypt the encrypted personal information and to perform the function. The function requested by the application can be executed normally while the application may not be aware of the result of decrypting the encrypted personal information, making it possible to protect the personal information.

Meanwhile, in this disclosure, encrypted personal information may refer, for example, to protected data, and actual personal information before being encrypted may be referred to, for example, as raw data.

The processor 120 may be configured to determine whether a request of an application is a request for personal information or a request to execute a function.

For example, if an application requests personal information, the processor 120 may be configured to determine whether to protect the personal information based on the information related to protection of the personal information is set for each application, to encrypt the personal information based on the determination result, and to provide the encrypted personal information to the application. However, if the application requests execution of a function, the processor 120 may be configured to decrypt the encrypted personal information and to execute the function related to the personal information, which is requested by the application.

For example, if a chatting application requests contact information to generate a friend list UI, the processor 120 may be configured to determine whether to protect the contact information with respect to the chatting application, to encrypt the contact information based on the determination result and to provide the encrypted contact information to the chatting application. However, if the chatting application requests execution of a call function, the processor 120 may be configured to decrypt the encrypted contact information and to execute the call function.

FIG. 2 is a block diagram illustrating an example configuration of an electronic apparatus.

Referring to FIG. 2, the electronic apparatus 100 includes the storage 110, the processor (e.g., including processing circuitry) 120 and a display (e.g., including a display panel and display driving circuitry) 130. The storage 110 and the processor 120 have already been described above, so further description thereof will not be provided.

The display 130 may display all video images which are generated as a plurality of images such as movie, drama, recorded image, slow video, etc. and displayed with a certain frame ratio or various objects such as still image, photo, document, etc.

The display 130 may be realized, for example, as Liquid Crystal Display (LCD), Organic Light Emitting Display (OLED), Plasma Display Panel (PDP), etc.

For example, if an execution request with respect to a function related to encrypted personal information is received from an application, the processor 120 may be configured to decrypt the encrypted personal information, to execute the function, and to display the execution result regarding the function through the display 130.

For example, if an execution request regarding a call sending function with respect to encrypted contact information is received, the processor 120 may be configured to decrypt the encrypted contact information, to execute the call sending function, and to display a screen including the telephone number of a counterpart included in the actual contact information and information that the call function is currently executed on the display 130.

In this example, the chatting application may obtain the encrypted contact information only, and cannot obtain information regarding the actual telephone number of the counterpart. As the actual contact information is not provided to the chatting application, the personal information can be protected.

The processor 120 may be configured to determine whether to protect personal information based on information related to protection of the personal information when an application requests the personal information, or may be configured to determine whether to protect personal information based on information related to protection of the personal information when the personal information requested by the application is preset personal information.

For example, if personal information with respect to a chatting application from among a plurality of applications is set to be protected, the processor 120 may be configured to determine whether to protect the contact information based on the information related to protection of the personal information when the chatting application requests the contact information.

If protection of personal information with respect to a photo file from among various personal information is not set, but personal information with respect to contact information is set to be protected, the processor 120 may be configured to determine not to protect a photo file based on the information related to protection of the personal information when the chatting application requests the photo file, but may be configured to determine to protect contact information based on the information related to protection of the personal information when the chatting application requests the contact information.

For example, the information related to protection of personal information may include information regarding an application which does not require protection of personal information and a type of personal information which does not require the protection.

For example, the information related to protection of personal information may include information to determine whether protection of personal information is necessary or not necessary for each application and may also include information to determine whether protection of personal information is necessary or not necessary based on the type of personal information regardless of an application.

For example, the information related to protection of personal information may include information that protection of personal information with respect to a chatting application from among a plurality of applications is required, but protection of personal information with respect to a map application is not required and thus, if the chatting application requests contact information, the processor 120 may be configured to encrypt the contact information and to provide the encrypted contact information to the chatting application, and if the map application requests location information, the processor 120 may be configured to not encrypt the location information and to provide the location information in a raw data state to the map application.

Alternatively, the information related to protection of personal information may include information that protection of personal information is required with respect to contact information regardless of the type of application, and protection of personal information is not required with respect to location information. Accordingly, if a chatting application or a mail application requests the contact information, the processor 120 may be configured to encrypt the contact information regardless of the type of application and to provide the encrypted contact information to the chatting application or the main application. If the chatting application or the map application requests the location information, the processor 120 may be configured to not encrypt the location information regardless of the type of application and to provide the location information in a raw data state to the chatting application or the main application.

For example, the processor 120 may be configured to determine not to protect personal information requested by an application based on the information regarding an application which does not require protection of personal information and a type of personal information which does not require protection, to not encrypt the personal information and to provide the personal information in a raw data state to the application.

Meanwhile, FIG. 3 is a block diagram illustrating an example configuration of the electronic apparatus of FIG. 1.

Referring to FIG. 3, an electronic apparatus 100'includes the storage 110, the processor (e.g., including processing circuitry) 120, the display (e.g., including a display panel and display driving circuitry) 130, a communicator (e.g., including communication circuitry) 140, a user interface (e.g., including interface circuitry) 150, an application driver (e.g., including application driving circuitry) 160, and a speaker 170. The description regarding the elements that overlap with the elements in FIGS. 1 and 2 may not be provided in greater detail.

The processor 120 is configured to control the overall operations of the electronic apparatus 100'.

For example, the processor 120 includes a RAM 121, a ROM 122, a main CPU 123, a graphic processor 124, first to nth interfaces 125-1∼125∼n, and a bus 126.

The RAM 121, the ROM 122, the main CPU 123, the graphic processor 124, the first to the nth interfaces 125-1∼125-n may be connected with one another via the bus 126.

The first to n-th interfaces 125-1 to 125-n may be connected with the above-described various elements. One of the first to nth interfaces 125-1 to 125-n may be a network interface which is connected with an external device via a network.

The main CPU 123 may access the storage 110 and perform booting using Operating System (O/S) stored in the storage 110. In addition, the main CPU 123 may perform various operations using various programs, content, data, etc. which are stored in the storage 110.

The ROM 122 stores a set of instructions for booting a system. In response to a turn on command being inputted and power being supplied, the main CPU 123 may copy the O/S stored in the storage 110 into the RAM 121 based on a command stored in the ROM 122, and boot the system by executing the O/S. In response to the booting being completed, the main CPU 123 may copy various application programs stored in the storage 110 into the RAM 121, and perform various operations by executing the application programs copied into the RAM 121.

The graphic processor 124 may generate a screen including various objects such as an icon, an image, a text, etc., using a calculator (not shown) and a renderer (not shown). The calculator (not shown) may calculate attribute values of objects to be displayed according to a layout of the screen, such as a coordinate value, a shape, a size, a color, etc., based on a received control command. The renderer (not shown) may generate the screen of various layouts including objects based on the attribute values calculated by the calculator (not shown). In particular, the graphic processor 124 may change a generated system response into a text form in response to a user's uttered voice, and determine the font, size, color, etc. of the text. The screen generated by the renderer (not shown) may be displayed in the display area of the display 130.

Meanwhile, the operation of the above-described processor 120 may be executed by a program stored in the storage 110.

The storage 110 may store an O/S software module to drive the electronic apparatus 100' and various data such as various multimedia contents.

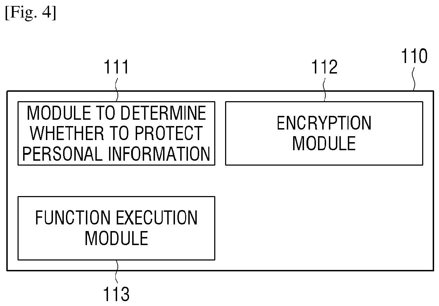

For example, the storage 110 may include a software module which when executed, if an application requests personal information, determines whether to protect personal information based on the set information, encrypts the personal information based on the determination result, and provides the encrypted personal information to the application, and if an application requests to execute a function related to encrypted personal information, decrypts the encrypted personal information and performs the function, which will be described in greater detail below with reference to FIG. 4.

The communicator 140 may include various communication circuitry that performs communication with various types of external apparatus according to various types of communication methods. The communicator 140 may include various communication circuitry, such as, for example, and without limitation, communication chips such as a WiFi chip, Bluetooth chip, a wireless communication chip, etc.

For example, the WiFi chip and the Bluetooth chip perform communication using a WiFi method and a Bluetooth method, respectively. The wireless communication chip may refer, for example, to a chip which performs communication according to various communication standards such as IEEE, Zigbee, 3rd Generation (3G), 3rd Generation Partnership Project (3GPP), Long Term Evolution (LTE), etc. In addition, the communicator may further include an NFC chip which operates according to an NFC method using a band of 13.56 MHz from among various RF-ID frequency bands such as 135 kHz, 13.56 MHz, 433 MHz, 860-960 MHz, 2.45 GHz, etc.

For example, the communicator 140 may perform communication using various communication circuitry with a plurality of servers providing each of a plurality of applications. With respect to the communication with each server, the same communication method may be used, but different communication methods may be used according to circumstances.

The application driver 160 drives an application which can be provided by the electronic apparatus 1000' and performs a function. For example, the application may refer to an application program which can be executed by itself, and may include various multimedia contents. For example, the term, 'multimedia contents', may include text, audio, still image, animation, video and interactive contents, Electronic Program Guide (EPG) contents from a content provider, electronic message received from users, information regarding current events, etc., but is not limited thereto.

Such an application may provide not only multimedia contents but also various information, and in order to provide the above information, personal information may be required as described above.

The speaker 170 may be used to output a sound signal, when necessary, while executing a function requested by an application. In addition, the electronic apparatus 100' may further include an audio processor, a video processor, a button, a USB port, a camera, a microphone, etc.

FIG. 4 is a diagram illustrating an example software module stored in a storage (110).

Referring to FIG. 4, the storage 110 may store programs such as a module 111 to determine whether to protect personal information, an encryption module 112 and a function execution module 113, etc.

The operation of the above-described processor 120 may be executed by a program stored in the storage 110. Hereinafter, the operation of the processor 120 using a program stored in the storage 110 will be described in greater detail below.

For example, if an application requests personal information, the module 111 to determine whether to protect personal application may perform the function of determining whether to protect the personal information based on information where information related to protection of personal information is set for each application.

The encryption module 112 may perform the function of encrypting personal information based on the determination result by the module 111 to determine whether to protect personal application.

If an execution request regarding a function related to encrypted personal information is received from an application, the function execution module 113 may decrypt the encrypted personal information and execute the function.

In addition, the storage 110 may include a communication module, and the communication module which is a module to perform communication with outside may include a device module which is used for communication with an external device, a messenger program, a Short Message Service (SMS) & Multimedia Message Service (MMS) program, a messaging module such as an e-mail program, a Call Info Aggregator program module, and a telephone module including a VoIP module, etc.

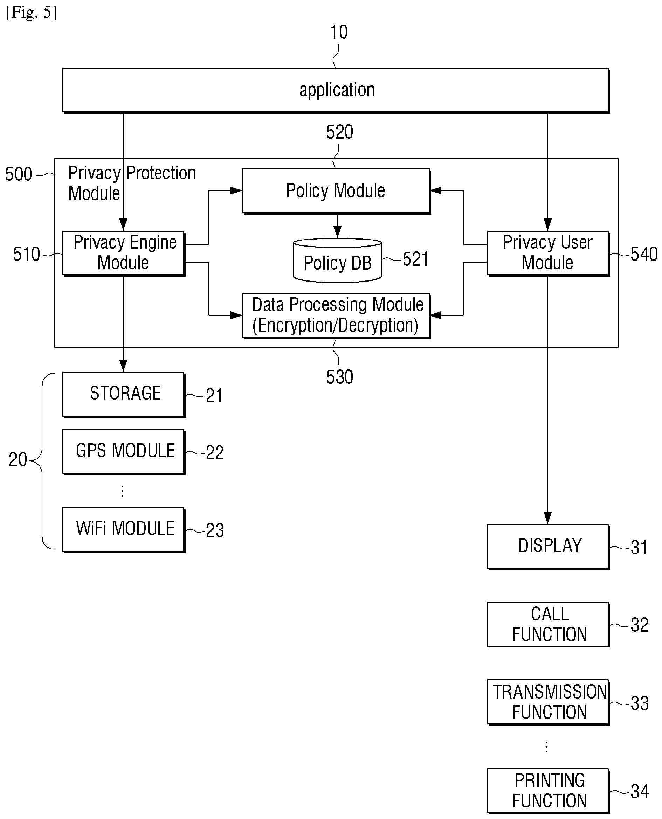

FIG. 5 is a diagram illustrating example processing of a processor.

Referring to FIG. 5, a Privacy Protection Module 500 includes, for example, a Privacy Engine Module 510, a Policy Module 520, a Policy DB 521, a Data Processing Module 530, and a Privacy User Module 540.

For example, the Privacy Protection Module 500 may be configured as a part or a chip included in the processor 120, and the Privacy Engine Module 510, the Policy Module 520, the Policy DB 521, the Data Processing Module 530, and the Privacy User Module 540 may also be configured as a part or a chip included in the processor 120.

In addition, the Privacy Protection Module 500, the Privacy Engine Module 510, the Policy Module 520, the Policy DB 521, the Data Processing Module 530, and the Privacy User Module 540 may be configured as a software module and in this example, may be stored in the storage 110.

In this disclosure, it may, for example, be assumed that the Privacy Protection Module 500, the Privacy Engine Module 510, the Policy Module 520, the Policy DB 521, the Data Processing Module 530, and the Privacy User Module 540 are configured as a part or a chip included in the processor 120.

If a request for personal information is received from an application 10, the Privacy Protection Module 500 may determine whether to protect the personal information based on information, where information related to protection of personal information is set for each application, and provide the encrypted personal information to the application 10 based on the determination result, and if an execution request regarding a function related to the encrypted personal information is received from the application 10, may decrypt the encrypted personal information and execute the function. For example, the information, where information related to protection of personal information is set for each application, may be defined as a privacy policy.

The privacy policy is stored in the Policy DB 521, and the Policy Module 520 performs the function of managing the privacy policy stored in the Policy DB 521.

If a request for personal information is received from the application 10, the Privacy Engine Module 510 may determine whether to protect the personal information requested by the application 10 with reference to the privacy policy regarding the corresponding application 10 detected by the Policy Module 520 and the requested personal information. If it is determined that the personal information requested by the application 10 should be protected, the Privacy Engine Module 510 may encrypt the personal information which is in the state of raw data as protected data through the Data Processing module 530 in accordance with the privacy policy.

For example, the Privacy Engine Module 510 may obtain personal information from an information source 20 in response to the request for personal information. The information source 20 may include a storage 21, a GPS module 22 a WiFi module 23, etc, but is not limited thereto. The Privacy Engine Module 510 may acquire personal information such as contact information, photo file, music file, document, etc. from the storage 21, location information from the GPS module 22, and information regarding communication quality state, downloading speed, etc. from the WiFi module 23.

The Privacy Engine Module 510 may provide encrypted personal information in the state of protected data to the application 10 through the Data Processing Module 530.

In addition, if an execution request with respect to a function related to encrypted personal information is received from the application 10, the Privacy User Module 540 may decrypt the encrypted personal information in the state of protected data to personal information in the state of raw data, and execute the requested function. Examples of such a function, may include, for example, a function of displaying a friend list UI, a call connection function, etc. For example, the Privacy User Module 540 may perform a display function 31 of displaying a friend list UI through a display 130 or execute a call function 32 through a communication module. Other examples of such a function may include a function of displaying a purchase UI, a function of transmitting purchase information to a shopping server, a function of printing print information received from an external device, a function of displaying a medical UI, etc., but is not limited thereto

For example, the Privacy User Module 540 may perform the display function 31 of displaying a purchase UI or a medical UI through the display 130, execute a transmission function 33 of transmitting information using the communication circuitry of the communicator 140, or execute a printing function 34 of printing print information using a printer (not illustrated).

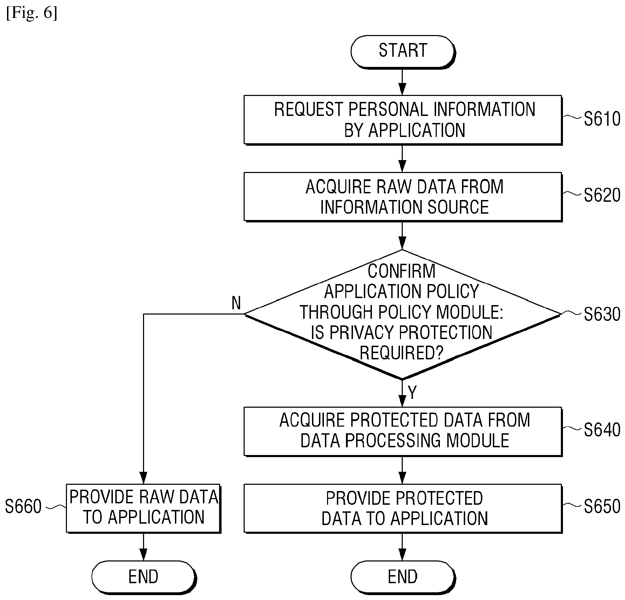

FIGS. 6 to 7 are flowcharts illustrating examples of data processing between each module of FIG. 5.

Referring to FIG. 6, if the application 10 requests personal information to the Privacy Protection Module 500 (S610), the Privacy Engine Module 510 may acquire the personal information in the state of raw data from the information source 20 (S620), and the Privacy Engine Module 510 may check a privacy policy regarding the application 10 through the Policy Module 520 to determine whether it is necessary to protect the personal information (S630).

If it is determined that the personal information needs to be protected, the Privacy Engine Module 510 may acquire encrypted personal information in the state of protected data from the Data Processing Module 530 (S640), and provide the encrypted personal information in the state of protected data to the application 10 (S650).

If it is determined that the personal information does not need to be protected, the Privacy Engine Module 510 may provide the personal information which is not encrypted and in the state of raw data to the application 10 (S660).

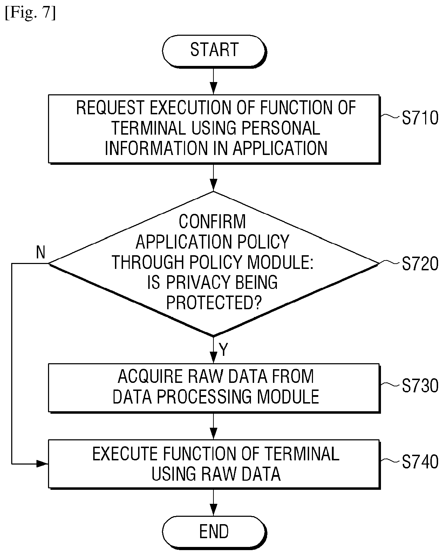

Meanwhile, referring to FIG. 7, if the application 10 requests the Privacy Protection Module 500 to execute a function related to the personal information (S710), the Privacy User module 540 may check a privacy policy regarding the application 10 through the Policy Module 520 to determine whether the personal information requested by the application 10 is in the state of protected data or raw data (S720).

If the personal information is in the state of protected data, the Privacy User Module 540 may decrypt the encrypted personal information which is in the state of protected data to acquire the personal information in the state of raw data (S730), and execute the function using the personal information in the state of raw data (S740).

If the personal information is in the state of raw data, the Privacy User Module 540 may execute the function using the personal information in the state of raw data (S740) without the process of decryption.

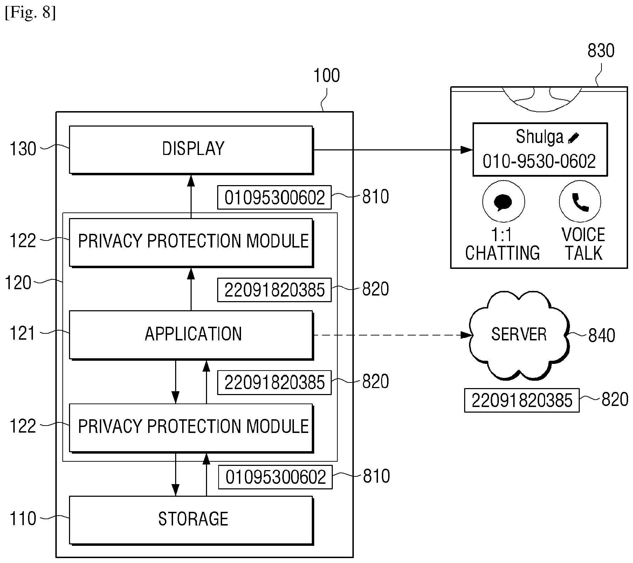

Meanwhile, FIGS. 8 to 13 are diagrams illustrating various example embodiments.

If an application in which it is determined that protection of private information is required requests contact information, the processor 120 may be configured to encrypt the contact information and to provide the encrypted contact information to the application, and if an execution request regarding a function related to the encrypted personal information is received from the application, the processor 120 may be configured to decrypt the encrypted contact information and to display a contact UI which is generated based on the decrypted contact information on the display 130.

Referring to FIG. 8 in relation to the above, if an application 121 requests the Privacy Protection Module 122 to provide address book information to generate a friend list UI, the Privacy Protection Module 122 may acquire raw data 810 regarding the address book information from the storage 110.

Here, a telephone number, "01095300602", is taken as an example of the raw data 810 regarding the address book information, but this is only an example for convenience of explanation and in general, the raw data 810 regarding the address book information to generate a friend list UI includes a plurality of telephone numbers.

The Privacy Protection Module 122 may encrypt the raw data 810 regarding the address book information to convert it to protected data 820 regarding the address book information.

For example, a telephone number, "22091820385", is taken as an example of the protected data 820 regarding the address book information, but this is only an example for convenience of explanation and in general, the protected data 820 regarding the address book information to generate a friend list UI includes a plurality of telephone numbers.

Meanwhile, the protected data 820 regarding the address book information is generated by encrypting the raw information 810 regarding the address book information and thus, the actual telephone number of "01095300602" is represented in the different form of "22091820385."

In addition, the Privacy Protection Module 122 may provide the protected data 820 regarding the address book information to the application 121. Accordingly, even though the application 121 transmits the address book information to a server 840, the address information transmitted by the application 121 is encrypted address book information 820 (22091820385) in the state of protected data which is not the address book information 810 (01095300602) in the state of raw data including the actual telephone number and thus, the personal information can be protected.

Meanwhile, if the application 121 transmits the protected data 820 regarding the address book information while requesting execution of the function of displaying a friend list UI using the protected data 820 regarding the address book information, the Privacy Protection Module 122 may decrypt the protected data 820 regarding the address book information to change the data to the raw data 810 regarding the address book information, generate a friend list UI 830 based on the raw data, and display the generated friend list UI 830 through the display 130.

For example, it is illustrated that two of the same Privacy Protection Module 122 are included in the processor 120, but this is to explain a case where the application 121 request the Privacy Protection Module 122 to provide personal information and a case where the application 121 requests to execute a function related to the personal information. The processor 120 may include one Privacy Protection module 122.

Likewise, the application 121 may acquire only the protected data 820 regarding the address book information and may not acquire the raw data 810 regarding the address book information as the raw data 810 regarding the address book information which is used to display the friend list UI 830 is used only in the display 130 and thus, the personal information can be protected.

Meanwhile, if an execution request regarding a call function based on encrypted contact information is received from an application, the processor 120 may be configured to decrypt the encrypted contact information and to execute the call function.

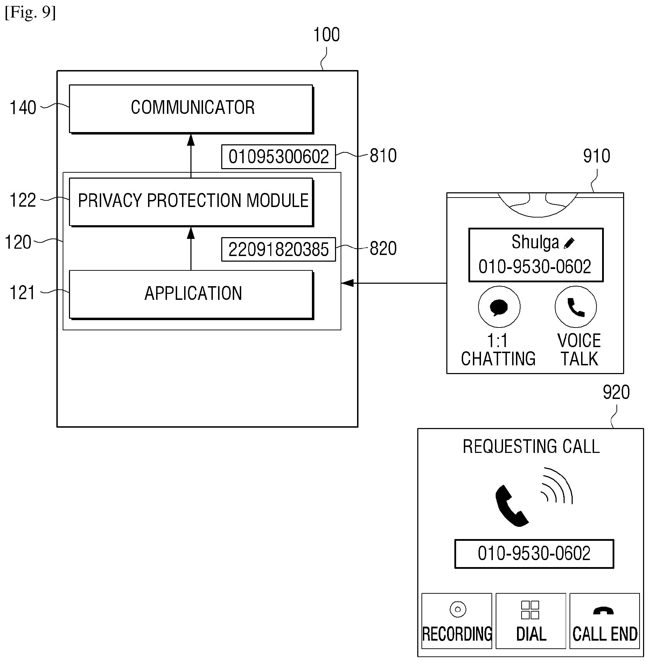

Referring to FIG. 9 with respect to the above, if a user inputs a user manipulation to execute a call function with a specific person marked on a friend list UI 910, the application 121 may transmit protected data 820 (22091820385) regarding the address book information while requesting the Privacy Protection Module 122 to execute the call function.

In addition, the Privacy Protection Module 122 may decrypt the protected data 820 regarding the address book information to change the data to the raw data 810 (01095300602) regarding the address book information, and execute a call sending request to the specific personal corresponding to the raw data 810 regarding the address book information through the communicator 140.

Further, the Privacy Protection Module 122 may control the electronic device 100 to display a call connection screen 920 displaying the raw data 810 (01095300602) regarding the address book information which is the actual telephone number while executing the call sending request through the communicator 140.

For example, the application 121 may acquire only the protected data 820 (22091820385) regarding the address book information when executing the call function, and cannot recognize the raw data 810 (01095300602) regarding the address book information which is the actual telephone number and thus, the personal information can be protected.

Meanwhile, if an application requests location information, the processor 120 may be configured to encrypt the location information and to provide the encrypted location information to the application, and if an execution request regarding a function related to the encrypted location information is received from the application, may be configured to decrypt the encrypted location information and to display a map screen which is generated based on the decrypted location information on a display.

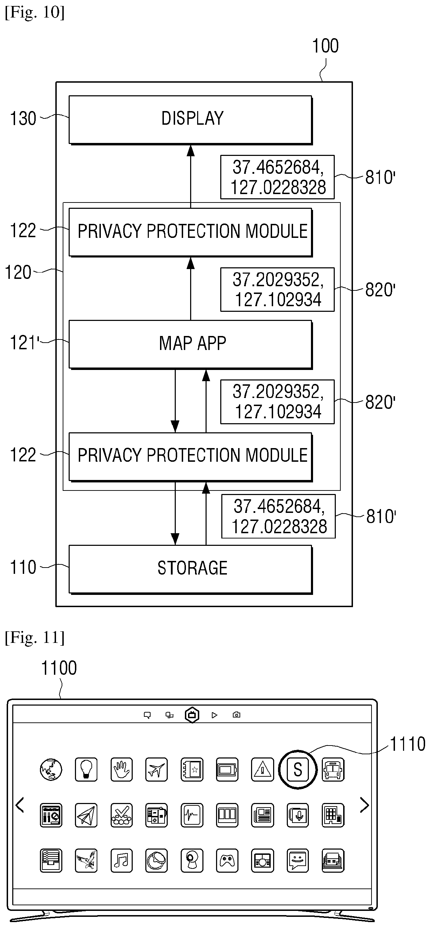

Referring to FIG. 10 with respect to the above, if a map application 121' requests the Privacy Protection Module 122 to provide location information to generate a screen representing the current location of the electronic apparatus 100, the Privacy Protection Module 122 may acquire raw data 810' regarding the location information from the storage 110.

For example, the raw data 810' regarding the location information includes information regarding latitude and longitude (37.4652684, 127.0228328), but the raw data 810' regarding the location information may include information regarding an azimuth and altitude rather than latitude and longitude.

The Privacy Protection Module 122 may encrypt the raw data 810' regarding the location information to convert it to protected data 820' regarding the location information.

For example, the protected data 820' regarding the location information may include information (37.2029352, 127.102934) which is generated and displayed by encrypting the information regarding location and longitude and has a different form from the information regarding the actual location and longitude (37.4652684, 127.0228328), which is the raw data 810' regarding the location information.

In addition, the Privacy Protection Module 122 may provide the protected data 820' regarding the location information to the map application 121'. Accordingly, even though the map application 121' transmits the location information, the location information transmitted by the map application 121' is encrypted location information 820' (37.2029352, 127.102934) in the state of protected data which is not the location information 810' (37.4652684, 127.0228328) in the state of raw data including the actual location information and thus, the personal information can be protected.

Meanwhile, if the map application 121' transmits the protected data 820' regarding the location information to the Privacy Protection Module 122 while requesting to execute the function of displaying a screen indicating the current location of the electronic apparatus 100 using the protected data 820' regarding the location information, the Privacy Protection Module 122 may decrypt the protected data 820' regarding the location information to change the data to the raw data 810' regarding the location information, generate a screen indicating the current location of the electronic apparatus 100 based on the raw data, and display the screen indicating the current location of the electronic apparatus 100 through the display 130.

For example, it is illustrated that two of the same Privacy Protection Module 122 are included in the processor 120, but this is to explain a case where the application 121 request the Privacy Protection Module 122 to provide personal information and a case where the application 121 requests to execute a function related to the personal information. The processor 120 may include one Privacy Protection module 122.

Likewise, the map application 121' may acquire only the protected data 820' regarding the location information and may not acquire the raw data 810' regarding the location information as the raw data 810' regarding the location information which is used to display the screen indicating the current location of the electronic apparatus 100 is used only in the display 130 and thus, the personal information can be protected.

Meanwhile, the electronic apparatus 100 may, for example, be realized as a smart TV instead of a user terminal device, which can execute at least one application.

Referring to FIG. 11, various applications may be displayed on the screen of a smart TV 1100 and in this case, a video call application 1110 may be executed to request the storage of the smart TV 1100 to provide address book information.

Likewise, the Privacy Protection Module 122 in the smart TV 1100 may acquire raw data regarding the address book information from the storage, encrypt the raw data as protected data regarding the address book information, and provide the protected data to the video call application 1110.

If the video call application 1110 transmits the protected data regarding the address book information to the Privacy Protection Module 122 while requesting to execute the function of displaying a screen regarding the address book using the protected data regarding the address book information, the Privacy Protection Module 122 may decrypt the protected data regarding the address book information to change the data to the raw data regarding the address book information, generate a screen regarding the address book information based on the raw data, and display the generated screen regarding the address book information through the display 130.

In this example, the video call application 1110 may acquire only the protected data regarding the address book information, and may not acquire the raw data regarding the address book information since the raw data regarding the address book information which is used to display the screen regarding the address book is used only in the display 130. Thus, personal information can be protected.

Likewise, if a user wishes to select a specific person and executes a video call with the specific person, the video call application 1110 request to execute a video call function using protected data regarding the address book information, and the Privacy Protection Module 122 controls the communicator 140 to execute the video call function by decrypting the protected data regarding the address book information to the raw data regarding the address book information.

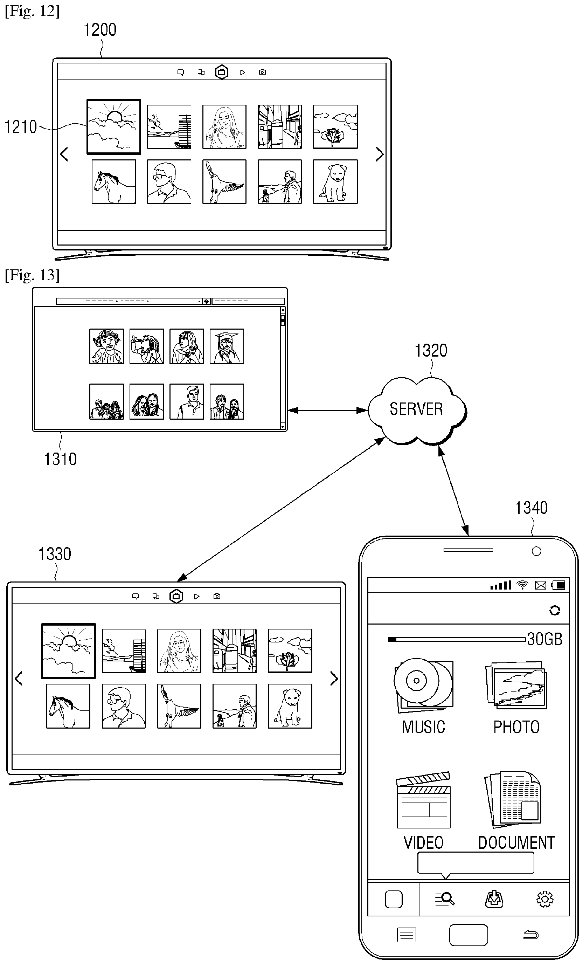

Meanwhile, referring to FIG. 12, if a photo album application is executed in a smart TV 1200, the photo album application acquires a photo file stored in the storage of the smart TV 1200 to generate and display various photo images as illustrated in FIG. 12. The process of displaying one of the images 1210 will be described as an example.

The photo album application may request the storage of the smart TV 1200 to provide the corresponding photo file, and the Privacy Protection Module 122 may acquire raw data regarding the corresponding photo file from the storage of the smart TV 1200, encrypt the raw data as protected data regarding the photo file, and provide the protected data to the photo album application.

If the photo album application transmits the protected data regarding the photo file to the Privacy Protection Module 122 while requesting to execute the function of displaying an album screen including the corresponding image 1210 using the protected data regarding the photo file, the Privacy Protection Module 122 may decrypt the protected data regarding the photo file to change the file to the raw data regarding the photo file, generate the corresponding image 1210 based on the raw data, and display the album screen including the generated corresponding image 1210 through the display 130.

In this example, the photo album application may acquire only the protected data regarding the photo file, and the raw data regarding the photo file which is used to display the album screen including the corresponding image 1210 is used only in the display 130. Accordingly, the photo album application may not acquire the raw data regarding the photo file and thus, personal information can be protected.

Meanwhile, even when data is transmitted between a plurality of electronic apparatuses and a server, the above-described process for protection of personal information can be applied.

Referring to FIG. 13, if a user executes a file uploading application in a notebook PC screen 1310, selects a photo file stored in the storage of the notebook PC and adds it to a file uploading window where the file uploading application is executed in order to upload the photo file onto a server 1320, the file uploading application uploads the added photo file onto the server 1320. In this example, the Privacy Protection Module 122 in the notebook PC may sense that the photo file is uploaded onto the server 1320, and convert the photo file in the state of raw data to a photo file in the state of protected data and provide the protected data to the file uploading application.

Accordingly, as the file uploading application transmits the photo file in the state of protected data to the server 1320, the server 1320 cannot acquire the photo file in the state of raw data. Thus, leakage of personal information can be prevented.

Subsequently, if the user executes the photo album application in a smart TV 1330 and executes the function of downloading the photo file in the state of protected data from the server 1320 through the photo album application and displaying the photo file, the Privacy Protection Module 122 in the smart TV 1330 may sense that the photo album application wishes to display the photo, and decrypt the photo file in the state of protected data, which is downloaded from the server 1320 to a photo file in the state of raw data and display the photo file through the display 130.

Further, if the user executes a file downloading application in a smart phone 1340, downloads the photo file in the state of protected data from the server 1320 and executes the function of displaying the downloaded photo file in the state of protected data, the Privacy Protection Module 122 in the smart phone 1340 may sense that the file downloading application wishes to display the photo, decrypt the photo file in the state of protected data, which is downloaded from the server 1320 to a photo file in the state of raw data, and display the photo file through the display 130.

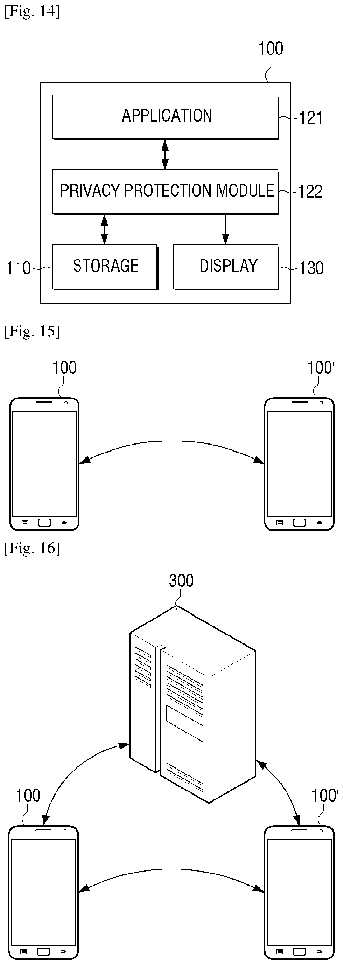

Meanwhile, FIG. 14 is a diagram illustrating an example structure of a Privacy Protection Module.

For example, in the above description regarding FIG. 8, two of the same Privacy Protection Module 122 are included in the processor 120, but this is just for convenience of explanation. If the application 121, the Privacy Protection Module 122, the storage 110, and the display 130 are included in the electronic apparatus 100 as illustrated in FIG. 14, one Privacy Protection Module 122 may acquire personal information from the storage 110 and transmit the personal information to the display 130 to perform a function.

Meanwhile, as illustrated in FIG. 13, a predetermined encryption method may be required in transmitting encrypted data between a plurality of electronic apparatuses and a server. In this regard, FIGS. 15 and 16 are diagrams illustrating an encryption method.

According to an example embodiment, as illustrated in FIG. 15, encryption and decryption can be performed, for example, through direct key exchange between the transmitting terminal 100 which transmits encrypted personal information and the receiving terminal 100' which receives the encrypted personal information.

For example, if the receiving terminal 100' which receives the encrypted personal information pre-stores a public key and a private key and the transmitting terminal 100 which transmits the encrypted personal information pre-stores the public key which the receiving terminal 100' has, the receiving terminal 100' may decrypt the encrypted personal information, for example, the personal information encrypted and transmitted by the transmitting terminal 100 through the corresponding public key using the private key. In this example, the public key may be exchanged between the transmitting terminal 100 and the receiving terminal 100' when a predetermine event occurs. For example, if a predetermine menu is selected, an address book supported by an instant messenger is exchanged, etc., the public key may be exchanged.

In addition, as illustrated in FIG. 16, encryption and decryption may be performed, for example, through an external encryption management server 300. For example, the encryption management server 300 may, for example, be realized as a cloud server, etc. which is operated by an apparatus manufacturer, but is not limited thereto.

When the encryption management server 300 manages a public key and a private key, the encryption management server 300 may allocate the private key to the receiving terminal 100' which receives an encrypted message and allocate the public key corresponding to the private key allocated to the receiving terminal 100' to the transmitting terminal 100 in response to a request from the transmitting terminal which transmits a message. Accordingly, the receiving terminal 100' may decrypt the message which is encrypted through the public key that the transmitting terminal 100 has by using the corresponding private key. Thus, an arbitrary private key may be generated and provided at each session.

The above-described encryption and decryption methods are only examples, and other various encryption and decryption methods may be used.

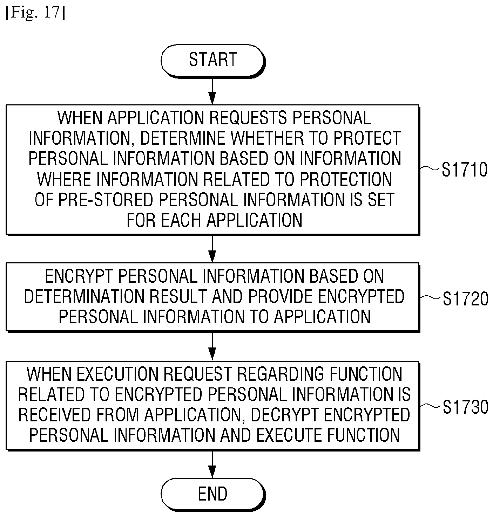

FIG. 17 is a flowchart illustrating an example method of controlling an electronic apparatus.

The method of controlling an electronic apparatus executing at least one application which performs a function using personal information includes, when an application requests personal information, determining whether to protect the personal information based on information, where information related to protection of pre-stored personal information is set for each application (S1710).

The personal information is encrypted and provided to the application based on the determination result (S1720).

If an execution request regarding a function related to the encrypted personal information is received from the application, the encrypted personal information is decrypted and the function is executed (S1730).

In addition, the method of controlling an electronic apparatus according to an example embodiment may further include determining whether a request from an application is a request for personal information or a request to execute a function.

For example, the determining whether to protect personal information may include determining whether to protect personal information based on information related to protection of personal information when an application requests personal information or determining whether to protect personal information based on information related to protection of personal information when the personal information requested by the application belongs to predetermined personal information.

In addition, the information related to protection of personal information may include information regarding an application which does not require protection of the personal information and a type of personal information which does not require the protection.

The providing may include determining whether to not protect personal information requested by the application based on information regarding an application which does not require protection of the personal information and a type of personal information which does not require the protection and providing the personal information to the application without encrypting the personal information.

In addition, the method of controlling an electronic apparatus according to an example embodiment may further include displaying an execution result of a function.

The personal information may include at least one of information regarding the location of the electronic apparatus, contact information, information regarding a photo file, and information regarding a message.

In addition, the providing includes, when the application requests contact information, encrypting the contact information and providing the encrypted contact information to the application, and the executing includes, when an execution request regarding a function related to the encrypted contact information is received from the application, decrypting the encrypted contact information and displaying a contact UI which is generated based on the decrypted contact information.

Further, the executing includes, when an execution request regarding a call function based on the encrypted contact information is received from the application, decrypting the encrypted contact information and executing the call function.

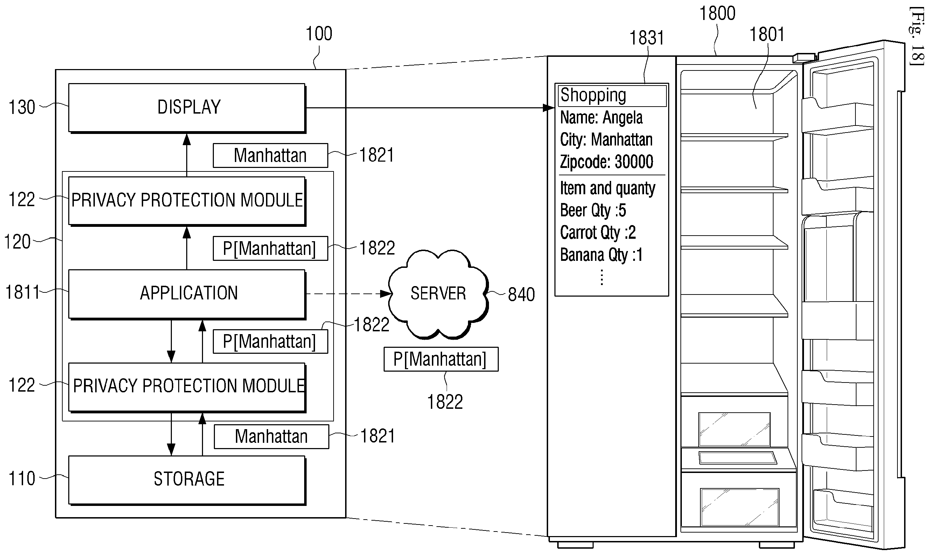

FIGS. 18 to 21 are diagrams illustrating various example embodiments.

In FIG. 18, the electronic apparatus 100 may be, for example, a food storage device (for example, refrigerator) 1800. If the electronic apparatus 100 is a food storage device, various applications 1811 related to food storage may be installed in the electronic apparatus 100. For example, the electronic apparatus 100 may include an application which performs the function of checking the storage condition of foods stored in the storage 1801 of the food storage device 1800, an application which performs the function of adjusting storage temperature of the electronic apparatus 100, an application which performs the function of checking stock history of foods of the electronic apparatus 100, an application which performs the function of displaying foods which are stored in the storage 1801 of the food storage device 1800, an application which performs the function of purchasing foods to be stored in the electronic apparatus 100, etc., but are not limited thereto. At least one of the above-described applications may be implemented as each function provided by one application.

In this example, an example application in which it is determined that protection of personal information is required according an example embodiment may be the application 1811 for purchasing items (for example, foods, etc.) using purchase information.

For example, if a user inputs purchase information through the user interface 150 (as shown, for example, in FIG. 3) to purchase an item, the input purchase information may be stored in the storage 110.

The purchase information may include at least one of, for example, user information (for example, user name, user's nick name, user's e-mail address, etc.) information regarding an item to be purchased (for example, identification information of food, expiration information of food, information regarding the number of foods to be purchased, etc.), financial information required for purchase (for example, card number, card expiration date, etc.), and delivery information (for example, user address, country of residence, user's postal code, etc.).

In another example, the processor 120 may detect the type, amount, expiration, expiration date, etc. of the foods stored in the storage 1801 of the food storage device 1800. If one of the type, amount and expiration date of the foods stored in the storage 1801 of the food storage device 1800 does not reach a predetermined standard, the processor 120 may automatically store information regarding the item which has to be purchased in the storage 110 as purchase information.

Under these circumstances, based on a user request to confirm the status of the purchase information, the application 1811 may request the processor 120 to provide the purchase information in order to display a purchase UI 1831 including the purchase information.

The processor 120 may encrypt the purchase information and provide the encrypted purchase information to an application. If an execution request regarding a function related to the encrypted purchase information is received, the processor 120 may decrypt the encrypted purchase information and display the purchase UI 1831 which is generated based on the decrypted purchase information through the display 130.

For example, if the application 1811 requests a Privacy Protection Module 122 to provide purchase information to generate the purchase UI 1831, the Privacy Protection Module 122 may acquire raw data 1821 regarding the purchase information from the storage 110.

For example, the raw data 1821 regarding the purchase information may, for example, be part of an address such as "Manhattan."

The Privacy Protection Module 122 may encrypt the raw data 1821 regarding the purchase information and convert to protected data 1822 regarding the purchase information.

Here, the protected data 1822 regarding the purchase information may, for example, be part of a user's address such as "P[Manhattan]."

Subsequently, the Privacy Protection Module 122 may provide the protected data 1822 regarding the purchase information to the application 1811. Accordingly, even if the application 1811 transmits the purchase information to the server 830 without the user's consent, the private information can be protected as the purchase information transmitted by the application 1811 is the encrypted purchase information 1822 in the state of protected data.

The application 1811 may request execution of the function of displaying the purchase UI 1831 using the protected data 1822 regarding the private information. To do so, once the application 1811 transmits the protected data 1822 regarding the purchase information to the Privacy Protection Module 122, the Privacy Protection Module 122 may decrypt the protected data 1822 regarding the purchase information and convert to the raw data 1821 regarding the purchase information. The display 130 may generate the purchase UI 1831 including the raw data 1821 and display the generated purchase UI 1831. In this case, the purchase UI 1831 may include purchase information. The purchase information may include at least one of user information, item information, financial information, and delivery information as described above.

In this example, the application 1811 may also acquire the protected data 1822 regarding the purchase information only, and the raw data 1821 regarding the purchase information is used only by the display 130 to display the purchase UI 1831. Thus, the application 1811 may not acquire the raw data 1821 regarding the purchase information and thus, private information can be protected.

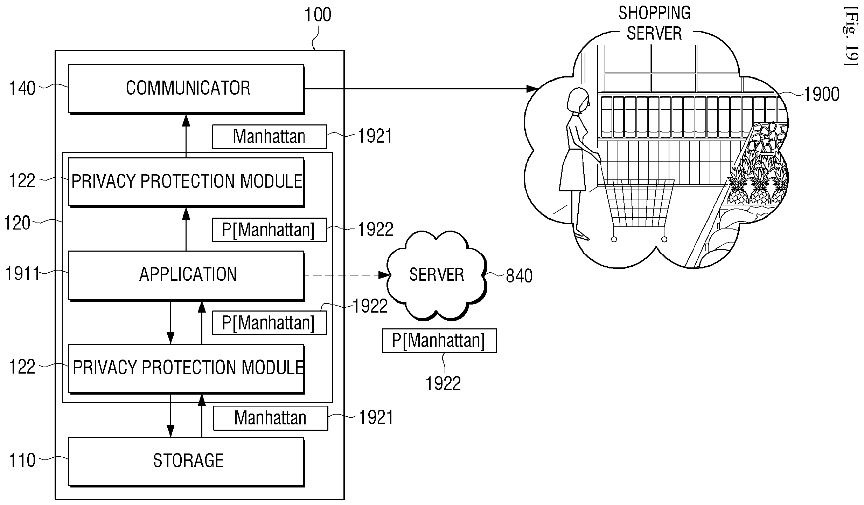

With reference to FIG. 19, a user who has decided the item to purchase may request to purchase the item with respect to a shopping server 1900 using an application 1911. In this example, the application 1911 of FIG. 19 may be the same as or similar to the application 1811 of FIG. 18 or the same kind of application as the application 1811.

According to the purchase request of the item, the application 1911 may request the processor 120 to provide purchase information in order to transmit the purchase information which the user has inputted and stored in the storage 110 to the shopping server 1900. The shopping server 1900 may be a server which manages delivery of the item that the user wishes to purchase. For example, the shopping server 1900 may search a business operator who has the item the user wishes to purchase and request the business operator to deliver the item to the residence of the user. In this example, the shopping server 1900 may, for example, be a server which is run directly by the business operator or a server which does sales for a plurality of business operators. The shopping server 1900 may be implemented as more than one server or a cloud server.

When the application 1911 requests the purchase information, the processor 120 may encrypt the purchase information and provide the encrypted purchase information to the application 1911. Subsequently, if an execution request regarding a function related to the encrypted purchase information is received from the application 1911, the processor 120 may decrypt the encrypted purchase information and transmit the decrypted purchase information to the external shopping server 1900 through the communicator 140.

For example, if the application 1911 requests the Privacy Protection Module 122 to provide the purchase information to be transmitted to the shopping server 1900, the Privacy Protection Module 122 may acquire raw data 1921 regarding the purchase information from the storage 110. Subsequently, the Privacy Protection Module 122 may encrypt the raw data 1921 regarding the purchase information and convert the raw data 1921 to protected data 1922.

For example, the protected data 1922 regarding the purchase information may, for example, be part of a user's address such as "P[Manhattan]."

The Privacy Protection Module 122 may provide the application 1911 with the protected data 1922 regarding the purchase information.

The application 1911 may request execution of a function of transmitting the purchase information to the shopping server 1900 using the protected data 1922 regarding the purchase information. To do so, if the application 1911 transmits the protected data 1922 regarding the purchase information to the Privacy Protection Module 122, the Privacy Protection Module 122 may decrypt the protected data 1922 regarding the purchase information and convert to the raw data 1921 regarding the purchase information. The communication circuitry of the communicator 140 may transmit the converted raw data 1921 to the shopping server 1900.

In this example, the application 1911 may also acquire the protected data 1922 regarding the purchase information only, and the raw data 1921 regarding the purchase information which is transmitted to the shopping server is used only by the communication circuitry of the communicator 140. Thus, the application 1911 may not acquire the raw data 1921 regarding the purchase information and thus, private information can be protected.

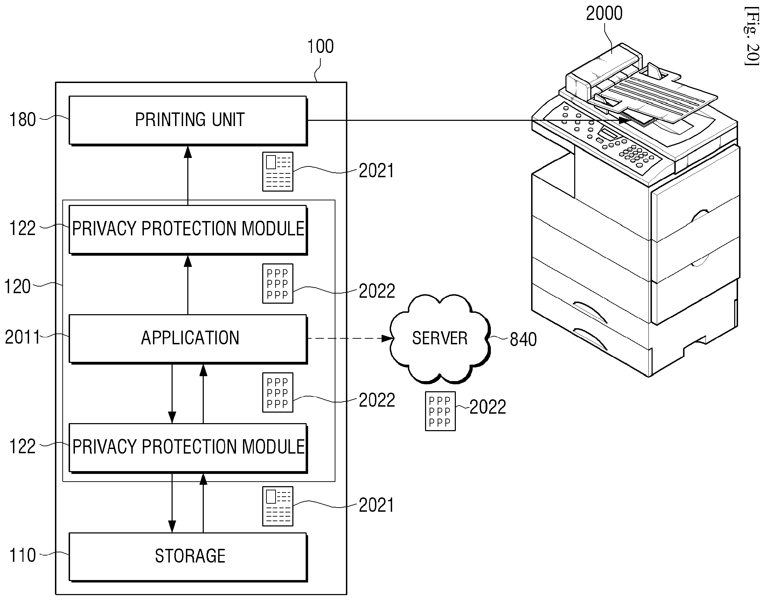

Referring to FIG. 20, the electronic apparatus 100 may, for example, be an image forming apparatus 2000 (for example, a printer).

If the electronic apparatus 100 is an image forming apparatus, various types of applications 2011 related to printing of contents may be installed in the electronic apparatus 100. For example, the electronic apparatus 100 may include an application for setting a print option (such as print volume, print quality, one-sided or double-sided print, color or black/white print, print format, etc.), an application for performing the function of providing print history, an application for setting a forwarding address of a printed document, an application for printing a content according to a predetermined print option, etc., but is not limited thereto. Meanwhile, at last one of the above-described applications may be implemented as a respective function which provides one application.

In this example, an example of an application of which private information needs to be protected according to an example embodiment may be an application 2011 for printing a content selected by a user.

For example, if a user selects a content to be printed in an external apparatus (not illustrated) (for example, personal computer, notebook computer, smart phone, etc.), the content to be printed may be converted to a printable format and transmitted to the electronic apparatus 100. In addition, if the user selects the content to be printed in the external apparatus, the content to be printed may be transmitted to the electronic apparatus 100, and the electronic apparatus 100 may change the received content to a printable format. An example of the printable format may be Postscript (PS), Printer control Language (PCL), etc. which supports a printer language. The content which has been changed to a printable format may be transmitted to the storage 110 of the electronic apparatus 100. The content of which format has been changed to be printable by the electronic apparatus 100, which is stored in the storage 110, may be referred to as print information.

In this example, the application 2011 may request the processor 120 to provide print information to perform a printing job according to a request from a user who wishes to print the selected content.

The processor 120 may encrypt the print information and provide the encrypted print information to the application. Upon receiving an execution request regarding a function related to the encrypted print information from the application, the processor 120 may decrypt the encrypted print information and perform a printing job using the decrypted print information through a printing unit 180. For example, the processor 120 may print print information on a printing medium using at least one of an ink-jet method, a dot-jet method and a laser-printer method.

For example, if the application 2011 requests the Privacy Protection Module 122 to provide print information, the Privacy Protection Module 122 may acquire raw data 2021 regarding the print information from the storage 110.

For example, the raw data 2021 regarding the print information may, for example, include at least one of text and image.

The Privacy Protection Module 122 may encrypt the raw data 2021 regarding the print information and convert to protected data 2022 regarding the print information.

The Privacy Protection Module 122 may provide the protected data 2022 regarding the print information to the application 2011. Accordingly, even if the application 2011 transmits the print information to the server 840 without the user's consent, the private information can be protected since the print information transmitted by the application 2011 is the encrypted print information 2022 in the form of protected data.

The application 2011 may request execution of a function of printing the print information using the protected data 2022 regarding the print information. To do so, if the application 2011 transmits the protected data 2022 regarding the print information to the Privacy Protection Module 122, the Privacy Protection Module 122 may decrypt the protected data 2022 regarding the print information, convert to the raw data 2021 regarding the print information and transmit the raw data 2021 to the printing unit 180. The printing unit 180 may print the received print information on a printing paper.

In this example, the application 2011 acquires only the protected data 2022 regarding the print information and thus, the raw data 2021 regarding the print information which is used for printing the print information is used only in the printing unit 180. Accordingly, the application 2011 cannot acquire the raw data 2021 regarding the print information and thus, the private information can be protected.

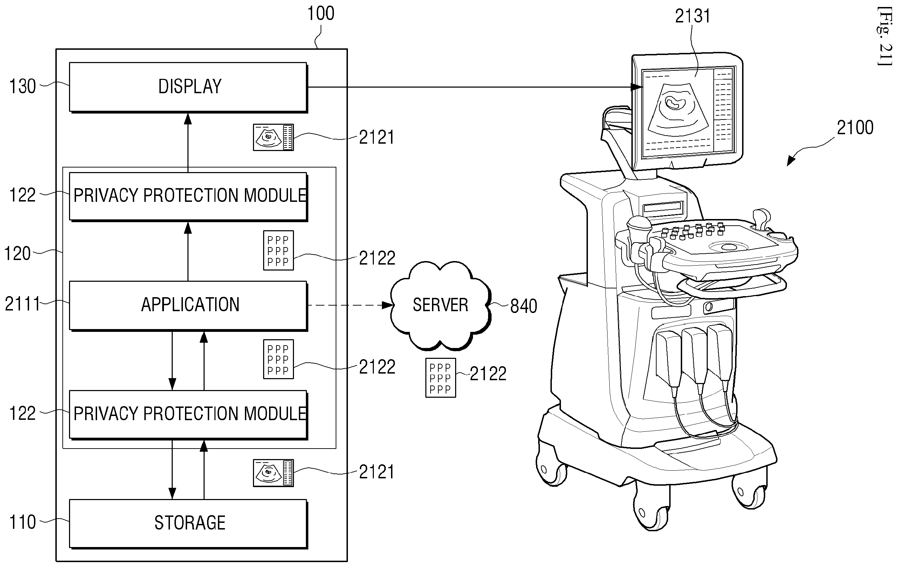

Referring to FIG. 21, the electronic apparatus 100 may, for example, be a medical image photographing device 2100 (for example, computed tomography photographing device, ultrasound photographing device, X-ray photographing device, magnetic resonance imaging device, etc.).

If the electronic apparatus 100 is a medical image photographing device, various applications 2111 related to photographing of a medical image may be installed in the electronic apparatus 100. For example, the electronic apparatus 100 may include an application which performs the function of photographing a subject (for example, patient, animal or phantom), an application of performing the function of setting a photographing option of a medical image (for example, an option of controlling wavelength irradiated on a subject, an irradiation amount of signal, etc.), an application of driving a rotation frame, a guide rail or a table to adjust the location of a subject, an application of performing the function of transmitting a photographed medical image to an external apparatus, an application of performing the function of inputting the medical information of a subject, an application of displaying information on a medical image which captures a subject, or the like, but is not limited thereto. Meanwhile, at least one of the above-described applications may be implemented as a respective function provided by one application.

In this example, an example of an application of which private information needs to be protected according to an example embodiment may be an application 2111 which displays or transmits medical information of a subject.

The medical information may be input from a user or received from an external server (not illustrated) and stored in the storage 110 of the electronic apparatus 100. In this example, the medical information may include weight, height, blood pressure, blood sugar level, body temperature, disease history, etc. of a patient. If a subject is photographed, the processor 120 may store medical image information which is another example of medical information in the storage 110.

In this example, the application 2111 may request the processor 120 to provide medical information to display a medical UI 2131 including medical information based on a request from a user who wishes to confirm the medical information of a patient.

The processor 120 may encrypt the medical information and provide the encrypted medical information to the application. Upon receiving an execution request regarding a function related to the encrypted medical information from the application, the processor 120 may decrypt the encrypted medical information and display the medical UI 2131 which is generated based on the decrypted medical information through the display 130.

For example, if the application 2111 requests the Privacy Protection Module 122 to provide medical information to generate a medical UI, the Privacy Protection Module 122 may acquire raw data 2121 regarding the medical information from the storage 110.

For example, the raw data 2121 regarding the medical information may, for example, be a medical image which captures the inside of a subject.

The Privacy Protection Module 122 may encrypt the raw data 2121 regarding the medical information and convert to protected data 2122 regarding the medical information.

The Privacy Protection Module 122 may provide the protected data 2122 regarding the medical information to the application 2111. Accordingly, even if the application 2111 transmits the medical information to the server 840 without the user's consent, the private information can be protected since the medical information transmitted by the application 2111 is the encrypted print information 2122 in the form of protected data.

The application 2111 may request execution of a function of displaying the medical UI 2131 using the protected data 2122 regarding the medical information. To do so, if the application transmits the protected data 2122 regarding the medical information to the Privacy Protection Module 122, the Privacy Protection Module 122 may decrypt the protected data 2122 regarding the medical information and convert to the raw data 2121 regarding the medical information. The display 130 may generate the medical UI 2131 including the raw data 2121 and display the generated medical UI 2131.

In this example, the application 2111 acquires only the protected data 2122 regarding the medical information and thus, the raw data 2121 regarding the medical information which is used for displaying the medical UI 2131 is used only in the display 130. Accordingly, the application 2111 cannot acquire the raw data 2121 regarding medical information and thus, the medical information can be protected.

Meanwhile, as for a storage medium according to an example embodiment, where a program to execute at least one application which performs a function using personal information is stored, the program performs determining whether to protect the personal information based on information, where information related to pre-stored personal information is set for each application, when an application requests the personal information, encrypting and providing the personal information to the application based on the determination result, and when an execution request regarding a function related to the encrypted personal information is received from the application, decrypting the encrypted personal information and executing the function.

Meanwhile, a non-transitory computer readable medium in which a program to perform the method of controlling according to an example embodiment is stored may be provided.

For example, a non-transitory computer readable medium where a program to perform determining whether to protect personal information based on information where information related to pre-stored personal information is set for each application when an application requests the personal information, encrypting the personal information based on the determination result and providing the encrypted personal information to the application, and when an execution request regarding a function related to the encrypted personal information is received from the application, decrypting the encrypted personal information and executing the function is stored may be provided.

The non-transitory recordable medium refers to a medium which may store data semi-permanently. For example, the above-described various example applications and programs may be stored and provided in a non-transitory recordable medium such as CD, DVD, hard disk, Blu-ray disk, USB, memory card, ROM, etc.

Although a bus is not illustrated in all the above-described block diagram regarding an electronic apparatus, communication between each element of the electronic apparatus may be performed through a bus. In addition, each device may further include a processor such as a CPU, a micro-processor, etc. which performs the above-described various steps.

The foregoing example embodiments and advantages are merely examples and are not to be construed as limiting the disclosure. The present teaching can be readily applied to other types of apparatuses. Also, the description of the example embodiments of the disclosure is intended to be illustrative, and not to limit the scope of the claims, and many alternatives, modifications, and variations will be apparent to those skilled in the art.

## Claims

1. An electronic apparatus (100) configured to execute an application to perform a function using personal information, the apparatus comprising:
a storage (110) configured to store the personal information, and information related to protection of the personal information which is set for the application; and
a processor (120) configured to:
in response to receiving a request for the personal information from the application, determine whether to protect the personal information based on the set information,
encrypt the personal information and provide the encrypted personal information to the application based on the determination result,
the apparatus **characterized in that**:
the processor is configured to, in response to receiving an execution request with respect to a function related to encrypted personal information from the application, obtain the personal information by decrypting the encrypted personal information and execute the function based on the personal information.

2. The apparatus (100) as claimed in claim 1, wherein the processor (120) is configured to determine whether the request from the application is a request for the personal information or a request to execute the function.

3. The apparatus (100) as claimed in claim 1, wherein the processor (120) is configured to determine whether to protect the personal information based on information related to protection of the personal information when the application requests the personal information, or to determine whether to protect the personal information based on information related to protection of the personal information when the personal information requested by the application is preset personal information.

4. The apparatus (100) as claimed in claim 1, wherein the information related to protection of the personal information includes information regarding an application which does not require protection of the personal information and a type of personal information which does not require the protection.

5. The apparatus (100) as claimed in claim 4, wherein the processor (120) is configured to determine not to protect the personal information requested by the application based on the information regarding an application which does not require protection of the personal information and a type of personal information which does not require the protection, to not encrypt the personal information and to provide the personal information to the application.

6. The apparatus (100) as claimed in claim 1, further comprising:
a display (130),
wherein the processor (120) is configured to display an execution result of the function on the display.

7. The apparatus (100) as claimed in claim 6, wherein the personal information includes one or more of information regarding a location of the electronic apparatus, contact information, information regarding a photo file, and information regarding a message.

8. The apparatus (100) as claimed in claim 7, wherein the processor (120), in response to receiving a request for the contact information from the application, is configured to encrypt the contact information and to provide the encrypted contact information to the application, and in response to receiving an execution request with respect to a function related to the encrypted contact information from the application, the processor is further configured to decrypt the encrypted contact information and to display on the display a content UI which is generated based on the decrypted contact information.

9. The apparatus (100) as claimed in claim 7, wherein the processor (120), in response to receiving an execution request with respect to a call function based on encrypted contact information from the application, is configured to decrypt the encrypted contact information and to execute the call function.

10. The apparatus (100) as claimed in claim 7, wherein the processor (120), in response to receiving a request for the location information from the application, is configured to encrypt the location information and to provide the encrypted location information to the application, and in response to receiving an execution request with respect to a function related to the encrypted location information from the application, the processor is further configured to decrypt the encrypted location information and to display on the display a map screen which is generated based on the decrypted location information.

11. A method of controlling an electronic apparatus which executes an application to perform a function using personal information, the method comprising:
determining (S1710), in response to receiving a request for the personal information from the application, whether to protect the personal information based on pre-stored information, where information related to protection of the personal information is set for the application;
encrypting and providing (S1720) the encrypted personal information to the application based on the determination result,
the method **characterized by**:
in response to receiving an execution request with respect to a function related to encrypted personal information from the application, obtaining the personal information by decrypting (S1730) the encrypted personal information and executing the function based on the personal information.

12. The method as claimed in claim 11, further comprising:
determining whether the request from the application is a request for the personal information (S610) or a request to execute the function (S710).

13. The method as claimed in claim 11, wherein the determining comprises determining whether to protect the personal information based on information related to protection of the personal information when the application requests the personal information, or determining whether to protect the personal information based on information related to protection of the personal information when the personal information requested by the application is preset personal information.

14. The method as claimed in claim 11, wherein the information related to protection of the personal information includes information regarding an application which does not require protection of the personal information and a type of personal information which does not require the protection.

15. The method as claimed in claim 14, wherein the providing comprises determining whether to not protect the personal information requested by the application based on the information regarding an application which does not require protection of the personal information and a type of personal information which does not require the protection, not encrypting the personal information and providing the personal information to the application.

## Patentansprüche

1. Elektronische Vorrichtung (100), die konfiguriert ist, um eine Anwendung auszuführen, um eine Funktion unter Verwendung persönlicher Informationen auszuführen, wobei die Vorrichtung Folgendes umfasst:
einen Speicher (110), der zum Speichern der persönlichen Informationen und Informationen zum Schutz der persönlichen Informationen konfiguriert ist, die für die Anwendung festgelegt sind; und
einen Prozessor (120), der konfiguriert ist, um:
als Antwort auf das Empfangen einer Anfrage nach den persönlichen Informationen von der Anwendung zu bestimmen, ob die persönlichen Informationen basierend auf den festgelegten Informationen geschützt werden sollen,
die persönlichen Informationen zu verschlüsseln und die verschlüsselten persönlichen Informationen für die Anwendung auf der Grundlage des Ergebnisses des Bestimmens bereitzustellen,
wobei die Vorrichtung **dadurch gekennzeichnet ist:**
**dass** der Prozessor so konfiguriert ist, dass er als Antwort auf das Empfangen einer Ausführungsanforderung in Bezug auf eine sich auf verschlüsselte persönliche Informationen von der Anwendung beziehende Funktion die persönlichen Informationen durch Entschlüsseln der verschlüsselten persönlichen Informationen erhält und die Funktion basierend auf den persönlichen Informationen ausführt.

2. Vorrichtung (100) nach Anspruch 1, wobei der Prozessor (120) konfiguriert ist, um zu bestimmen, ob die Anforderung von der Anwendung eine Anforderung für die persönlichen Informationen oder eine Anforderung zum Ausführen der Funktion ist.

3. Vorrichtung (100) nach Anspruch 1, wobei der Prozessor (120) konfiguriert ist, um zu bestimmen, ob die persönlichen Informationen auf der Grundlage von Informationen zum Schutz der persönlichen Informationen geschützt werden sollen, wenn die Anwendung die persönlichen Informationen anfordert, oder zu bestimmen, ob die persönlichen Informationen auf der Grundlage von Informationen zum Schutz der persönlichen Informationen geschützt werden sollen, wenn die von der Anwendung angeforderten persönlichen Informationen voreingestellte persönliche Informationen sind. ob die persönlichen Informationen basierend auf Informationen, die sich auf den Schutz der persönlichen Informationen beziehen, geschützt werden sollen, wenn die Anwendung die persönlichen Informationen anfordert,

4. Vorrichtung (100) nach Anspruch 1, wobei die Informationen zum Schutz der persönlichen Informationen Informationen zu einer Anwendung, die keinen Schutz der persönlichen Informationen erfordert, und eine Art von persönlichen Informationen umfassen, die keinen Schutz erfordert.

5. Vorrichtung (100) nach Anspruch 4, wobei der Prozessor (120) konfiguriert ist, um zu bestimmen, die von der Anwendung angeforderten persönlichen Informationen nicht zu schützen, basierend auf den Informationen bezüglich einer Anwendung, die keinen Schutz der persönlichen Informationen erfordert, und einer Art von persönlichen Informationen, die keinen Schutz erfordert, die persönlichen Informationen nicht zu verschlüsseln, und die persönlichen Informationen für die Anwendung bereitzustellen.

6. Vorrichtung (100) nach Anspruch 1, ferner umfassend:
eine Anzeige (130),
wobei der Prozessor (120) konfiguriert ist, um ein Ausführungsergebnis der Funktion auf der Anzeige anzuzeigen.

7. Vorrichtung (100) nach Anspruch 6, wobei die persönlichen Informationen eine oder mehrere Informationen bezüglich eines Standortes der elektronischen Vorrichtung, Kontaktinformationen, Informationen bezüglich einer Fotodatei und Informationen bezüglich einer Nachricht enthalten.

8. Vorrichtung (100) nach Anspruch 7, wobei der Prozessor (120) als Antwort auf das Empfangen einer Anfrage nach den Kontaktinformationen von der Anwendung konfiguriert ist, um die Kontaktinformationen zu verschlüsseln und die verschlüsselten Kontaktinformationen an die Anwendung zu liefern, und als Antwort auf das Empfangen einer Ausführungsanforderung in Bezug auf eine Funktion, und der Prozessor ferner als Antwort auf das Empfangen einer Ausführungsanforderung in Bezug auf eine Funktion, die sich auf die verschlüsselten Kontaktinformationen von der Anwendung bezieht, konfiguriert ist, um die verschlüsselten Kontaktinformationen zu entschlüsseln und auf der Anzeige eine Inhalts-Benutzeroberfläche anzuzeigen, die basierend auf den entschlüsselten Kontaktinformationen erzeugt wird.

9. Vorrichtung (100) nach Anspruch 7, wobei der Prozessor (120) als Antwort auf das Empfangen einer Ausführungsanforderung in Bezug auf eine Aufruffunktion basierend auf verschlüsselten Kontaktinformationen von der Anwendung konfiguriert ist, um die verschlüsselten Kontaktinformationen zu entschlüsseln, und um die Aufruffunktion auszuführen.

10. Vorrichtung (100) nach Anspruch 7, wobei der Prozessor (120) als Antwort auf das Empfangen einer Anforderung nach den Standortinformationen von der Anwendung konfiguriert ist, um die Standortinformationen zu verschlüsseln und die verschlüsselten Standortinformationen der Anwendung bereitzustellen, und der Prozessor ferner als Antwort auf das Empfangen einer Ausführungsanforderung in Bezug auf eine Funktion, die sich auf die verschlüsselten Standortinformationen von der Anwendung bezieht, konfiguriert ist, um die verschlüsselten Standortinformationen zu entschlüsseln und auf der Anzeige einen Kartenbildschirm anzuzeigen, der basierend auf den entschlüsselten Standortinformationen erzeugt wird.

11. Verfahren zum Steuern einer elektronischen Vorrichtung, die eine Anwendung zum Ausführen einer Funktion unter Verwendung persönlicher Informationen ausführt, wobei das Verfahren Folgendes umfasst:
Bestimmen (S1710) als Antwort auf das Empfangen einer Anfrage nach den persönlichen Informationen von der Anwendung, ob die persönlichen Informationen auf der Grundlage vorgespeicherter Informationen geschützt werden sollen, wo Informationen zum Schutz der persönlichen Informationen für die Anwendung festgelegt werden;
Verschlüsseln und Bereitstellen (S1720) der verschlüsselten persönlichen Informationen für die Anwendung basierend auf dem Ergebnis des Bestimmens,
das Verfahren **gekennzeichnet durch**:
als Antwort auf das Empfangen einer Ausführungsanforderung in Bezug auf eine Funktion, die sich auf verschlüsselte persönliche Informationen von der Anwendung bezieht, Erhalten der persönlichen Informationen **durch** Entschlüsseln (S1730) der verschlüsselten persönlichen Informationen und Ausführen der Funktion basierend auf den persönlichen Informationen.

12. Verfahren nach Anspruch 11, ferner umfassend:
Bestimmen, ob die Anforderung von der Anwendung eine Anforderung für die persönlichen Informationen (S610) oder eine Anforderung zum Ausführen der Funktion (S710) ist.

13. Verfahren nach Anspruch 11, wobei das Bestimmen das Bestimmen umfasst, ob die persönlichen Informationen basierend auf der Grundlage von Informationen zum Schutz der persönlichen Informationen zu schützen sind, wenn die Anmeldung die persönlichen Informationen anfordert, oder das Bestimmen umfasst, ob die persönlichen Informationen auf der Grundlage von Informationen zum Schutz der persönlichen Informationen geschützt werden sollen, wenn die von der Anwendung angeforderten persönlichen Informationen voreingestellte persönliche Informationen sind.

14. Verfahren nach Anspruch 11, wobei die Informationen in Bezug auf den Schutz der persönlichen Informationen Informationen in Bezug auf eine Anwendung, die keinen Schutz der persönlichen Informationen erfordert, und eine Art von persönlichen Informationen umfassen, die keinen Schutz erfordert.

15. Verfahren nach Anspruch 14, wobei das Bereitstellen das Bestimmen, ob die von der Anmeldung angeforderten persönlichen Informationen nicht geschützt werden sollen, basierend auf den Informationen bezüglich einer Anwendung, die keinen Schutz der persönlichen Informationen erfordert, und einer Art von persönlichen Informationen, die keinen Schutz erfordert, Verschlüsseln der persönlichen Informationen und Bereitstellen der persönlichen Informationen für die Anwendung umfasst.

## Revendications

1. Appareil électronique (100) configuré pour exécuter une application afin de remplir une fonction en utilisant des informations personnelles, l'appareil comprenant :
un stockage (110) configuré pour stocker les informations personnelles, et les informations relatives à la protection des informations personnelles qui sont définies pour l'application ; et
un processeur (120) configuré pour :
en réponse à la réception d'une demande des informations personnelles depuis l'application, déterminer s'il convient de protéger les informations personnelles sur la base des informations définies,
chiffrer les informations personnelles et fournir les informations personnelles chiffrées à l'application sur la base du résultat de détermination,
l'appareil étant **caractérisé en ce que** :
le processeur est configuré pour, en réponse à la réception d'une demande d'exécution par rapport à une fonction relative à des informations personnelles chiffrées depuis l'application, obtenir les informations personnelles en déchiffrant les informations personnelles chiffrées et exécuter la fonction sur la base des informations personnelles.

2. Appareil (100) selon la revendication 1, dans lequel le processeur (120) est configuré pour déterminer si la demande depuis l'application est une demande des informations personnelles ou une demande d'exécution de la fonction.

3. Appareil (100) selon la revendication 1, dans lequel le processeur (120) est configuré pour déterminer s'il convient de protéger les informations personnelles sur la base d'informations relatives à la protection des informations personnelles lorsque l'application demande les informations personnelles, ou pour déterminer s'il convient de protéger les informations personnelles sur la base d'informations relatives à la protection des informations personnelles lorsque les informations personnelles demandées par l'application sont des informations personnelles prédéfinies.

4. Appareil (100) selon la revendication 1, dans lequel les informations relatives à la protection des informations personnelles comportent des informations concernant une application qui ne nécessite pas de protection des informations personnelles et un type d'informations personnelles qui ne nécessite pas la protection.

5. Appareil (100) selon la revendication 4, dans lequel le processeur (120) est configuré pour déterminer de ne pas protéger les informations personnelles demandées par l'application sur la base des informations concernant une application qui ne nécessite pas de protection des informations personnelles et un type d'informations personnelles qui ne nécessite pas la protection, de ne pas chiffrer les informations personnelles et de fournir les informations personnelles à l'application.

6. Appareil (100) selon la revendication 1, comprenant en outre :
un écran (130),
dans lequel le processeur (120) est configuré pour afficher un résultat d'exécution de la fonction sur l'écran.

7. Appareil (100) selon la revendication 6, dans lequel les informations personnelles comportent un ou plusieurs éléments parmi des informations concernant un emplacement de l'appareil électronique, des informations de contact, des informations concernant un fichier photo, et des informations concernant un message.

8. Appareil (100) selon la revendication 7, dans lequel le processeur (120), en réponse à la réception d'une demande des informations de contact depuis l'application, est configuré pour chiffrer les informations de contact et pour fournir les informations de contact chiffrées à l'application, et en réponse à la réception d'une demande d'exécution par rapport à une fonction relative aux informations de contact chiffrées depuis l'application, le processeur est en outre configuré pour déchiffrer les informations de contact chiffrées et afficher sur l'écran une UI de contenu qui est générée sur la base des informations de contact déchiffrées.

9. Appareil (100) selon la revendication 7, dans lequel le processeur (120), en réponse à la réception d'une demande d'exécution par rapport à une fonction d'appel sur la base d'informations de contact chiffrées depuis l'application, est configuré pour déchiffrer les informations de contact chiffrées et exécuter la fonction d'appel.

10. Appareil (100) selon la revendication 7, dans lequel le processeur (120), en réponse à la réception d'une demande des informations d'emplacement depuis l'application, est configuré pour chiffrer les informations d'emplacement et pour fournir les informations d'emplacement chiffrées à l'application, et en réponse à la réception d'une demande d'exécution par rapport à une fonction relative aux informations d'emplacement chiffrées depuis l'application, le processeur est en outre configuré pour déchiffrer les informations d'emplacement chiffrées et pour afficher sur l'écran un écran de carte qui est généré sur la base des informations d'emplacement déchiffrées.

11. Procédé de commande d'un appareil électronique qui exécute une application pour remplir une fonction en utilisant des informations personnelles, le procédé comprenant :
le fait de déterminer (S1710), en réponse à la réception d'une demande des informations personnelles depuis l'application, s'il convient de protéger les informations personnelles sur la base d'informations pré-stockées, où des informations relatives à la protection des informations personnelles sont définies pour l'application ;
le chiffrement et la fourniture (S1720) des informations personnelles chiffrées à l'application sur la base du résultat de détermination,
le procédé étant **caractérisé par** :
en réponse à la réception d'une demande d'exécution par rapport à une fonction relative à des informations personnelles chiffrées depuis l'application, l'obtention des informations personnelles en déchiffrant (S1730) les informations personnelles chiffrées et en exécutant la fonction sur la base des informations personnelles.

12. Procédé selon la revendication 11, comprenant en outre :
le fait de déterminer si la demande depuis l'application est une demande des informations personnelles (S610) ou une demande d'exécution de la fonction (S710).

13. Procédé selon la revendication 11, dans lequel la détermination comprend le fait de déterminer s'il convient de protéger les informations personnelles sur la base d'informations relatives à la protection des informations personnelles lorsque l'application demande les informations personnelles, ou le fait de déterminer s'il convient de protéger les informations personnelles sur la base d'informations relatives à la protection des informations personnelles lorsque les informations personnelles demandées par l'application sont des informations personnelles prédéfinies.

14. Procédé selon la revendication 11, dans lequel les informations relatives à la protection des informations personnelles comportent des informations concernant une application qui ne nécessite pas de protection des informations personnelles et un type d'informations personnelles qui ne nécessite pas la protection.

15. Procédé selon la revendication 14, dans lequel la fourniture comprend le fait de déterminer s'il convient de ne pas protéger les informations personnelles demandées par l'application sur la base des informations concernant une application qui ne nécessite pas de protection des informations personnelles et un type d'informations personnelles qui ne nécessite pas la protection, de ne pas chiffrer les informations personnelles et de fournir les informations personnelles à l'application.
